# EUROPEAN PATENT SPECIFICATION

(11) **EP 2 709 767 B1**
(45) Date of publication and mention of the grant of the patent: **06.11.2019**
(21) Application number: 12785921.3
(22) Date of filing: 03.05.2012
(51) Int. Cl.: B04B 11/04, B04B 1/10, B04B 7/06, G01M 3/24, G01P 3/00, G01P 15/00, G01F 1/28, B04B 13/00

(54) **A SENSOR DEVICE FOR A CENTRIFUGAL SEPARATOR AND A CENTRIFUGAL SEPARATOR WITH SUCH A SENSOR**
SENSORVORRICHTUNG FÜR EINEN FLIEHKRAFTABSCHEIDER UND FLIEHKRAFTABSCHEIDER MIT EINEM SOLCHEN SENSOR
DISPOSITIF DE CAPTEUR DESTINÉ À UN SÉPARATEUR CENTRIFUGE ET SÉPARATEUR CENTRIFUGE DOTÉ DUDIT CAPTEUR

(30) Priority: 16.05.2011 SE 1150439
(43) Date of publication of application: 26.03.2014
(73) Proprietor: Alfa Laval Corporate AB, 221 00 Lund (SE)
(72) Inventor: THORWID, Peter, S-172 75 Sundbyberg (SE); ISAKSSON, Roland, S-714 72 Ställdalen (SE); HILLSTRÖM, Lars, S-753 17 Uppsala (SE)
(74) Representative: Alfa Laval Attorneys
(86) International application number: PCT/SE2012/050454
(87) International publication number: WO 2012/158093

(56) References cited:
- EP-A2- 0 560 391
- DE-A1- 3 925 198
- DE-A1- 19 803 379
- DE-C1- 4 300 199
- US-A- 2 561 763
- US-A- 3 557 616
- US-A- 3 623 657
- US-A- 3 841 144
- US-A- 3 986 663
- US-A- 4 162 980
- US-A- 4 206 871
- US-A- 4 410 318

## Description

### THE BACKGROUND OF THE INVENTION AND PRIOR ART

The present invention refers generally to the supervision of the operation of centrifugal separators having nozzles for the discharge of a product, such as a liquid, which for instance comprises or consists of sludge. More precisely, the invention refers to a centrifugal separator according to the precharacterizing portion of claim 1, see US-4,410,318.

SE-B-409662 discloses a device for indicating leakage from a centrifuge rotor in a centrifugal separator. A sensor element is provided at the outer end of a receiving rod which extends radially outwardly with respect to the axis of rotation of the centrifuge rotor.

DE-C-4300199 discloses another sensor device for a centrifugal separator. The centrifugal separator disclosed in this document comprises a stationary casing and a centrifuge rotor rotating in the stationary casing. The centrifuge rotor is provided with intermittently openable nozzles for discharge of sludge. The purpose of the sensor device is to indicate leakage from the intermittently openable nozzles. The sensor device comprises a receiving head provided immediately outside the openable nozzles. A channel extends from the receiving head out through the stationary casing and has an aperture in the atmosphere outside the centrifugal separator. When the receiving head is hit by leaking sludge, an acoustic signal will be generated. The acoustic signal is moving outwardly in the channel and may be detected by means of a sound pressure receiver. By means of this detecting, leakage may thus be established. Such an acoustic signal is sensitive to disturbances, which may have a negative influence on the possibility to evaluate the signals. In addition, an acoustic signal is moving relatively slowly in air and may be difficult to damp in a satisfactory manner.

### SUMMARY OF THE INVENTION

The object of the present invention is to provide centrifugal separator having a sensor device which has a high reliability and which is suitable for providing information about a plurality of various parameters and conditions of the centrifugal separator. Furthermore, it is aimed at a sensor device having a low sensitivity to disturbances and defects.

This object is achieved by the centrifugal separator initially defined, which is characterized in that the transfer element is arranged to be movable in relation to the centrifuge rotor and the stationary casing in such a way that the position of the receiving head is adjustable along the axis of rotation.

When the product, for instance a liquid or sludge, from the nozzles hits the receiving head, vibrations will be created in the receiving head and the transfer element. These vibrations may have various frequencies from 1-600 Hz up to hundreds of kHz. Such vibrations will in a secure and reliable manner propagate in the material of the transfer element to the sensor element provided outside the stationary casing and thus not directly subjected to the extreme environment which is present inside the stationary casing. The sensor device according to the invention may be used for sensing the exact point of time when the product is discharged through the nozzles for identifying which nozzle or nozzles having a reduced functioning and possibly for determining the rotary speed of the centrifuge rotor, and, in the case that the nozzles are intermittently openable and thus mostly closed, if any of the nozzles presents a small leakage. The sensor device according to the invention provides a very sensitive sensing of vibrations, and thus a possible leakage may be detected at a very early stage before the leakage has any serious impact on the function and the performance of the centrifugal separator. Thanks to the movability of the transfer element, it is possible to adjust the position of transfer element and the receiving member in relation to the nozzles so that a reliable sensing of liquid or sludge may be ensured. Furthermore, such an adjustment of the position of the receiving head enables determination of several different parameters of the product leaving the nozzles.

According to an embodiment of the invention, the sensor device comprises a holder member which is configured to extend through and be fixedly connected to the stationary casing, wherein the transfer element is movably provided in the holder member. By means of such a holder member, the movability of the transfer element may be enabled in an easy manner.

According to a further embodiment of the invention, the transfer element is displaceable along the longitudinal direction. In such a way, the transfer element and the receiving head may be adjusted in such a way that the receiving head is brought to an optimum position in relation to the product, for instance liquid or sludge, which leaves one, several or all nozzles. A further advantage of such a displaceability is a possibility to detect the wear of the nozzles. When the nozzles are worn, or defect in any other way, for instance through splintering, the distribution of the discharged product will be greater than if the nozzles are intact. It is thus possible to detect if any of the nozzles is worn and in that case also which of the nozzles.

According to a further embodiment of the invention, the transfer element is rotatable around the longitudinal direction. By means of such a rotatability it is possible to obtain information about the direction of the possible leakage from the nozzles.

According to a further embodiment of the invention, the sensor element is centrally provided on the transfer element with respect to the longitudinal direction. By providing the sensor element centrally, or in the middle, of the transfer element it will be located at a distance, or a significant distance, from the outer end. That means that the vibrations, that propagates in the transfer element passing the sensor element and back from the outer end, will be weakened to such a degree at they do not any longer influence the sensor element and the measurement result.

According to a further embodiment of the invention, the transfer element is manufactured of a material configured to permit said propagation of vibrations from the receiving head to the sensor element.

According to e further embodiment of the invention, the transfer element is tubular having a wall of said material, which forms a closed inner space, wherein the wall is adapted to permit propagation of vibrations from the receiving head to the sensor element. The wall of the tubular transfer element is thus manufactured of said material, for instance a metallic material, and is well suitable for transferring vibrations from the receiving head to the sensor element. Advantageously, the closed inner space is filled with a damping material. In such a way, the vibrations may be damped in a quick and efficient manner so that the sensor device in a secure way may differentiate vibrations from different occurrences from each other. The damping material may advantageously comprise or mainly consist of sand.

According to a further embodiment of the invention, the sensor element comprises an accelerometer, preferably a linear accelerometer or accelerometer with one axis. By means of such an accelerometer, vibrations with the above defined frequencies may in a secure manner be sensed and suitable signals provided for further transfer to the evaluation unit. A linear accelerometer is particularly advantageous when determining the direction of the possible leakage.

According to a further embodiment of the invention, the evaluation unit communicates with the sensor element via a conduit comprising a zener barrier.

According to a further embodiment of the invention, the evaluation unit is configured to calculate the rotary speed of the centrifuge rotor by means of said signals.

According to a further embodiment of the invention, the evaluation unit is configured to establish a possible leakage from the nozzles by means of said signals.

According to e further embodiment of the invention, said nozzles of the centrifuge rotor are permanently open. An advantage that is particularly important in such centrifugal separators is the possibility to determine the size of the flow of the product discharged through the nozzles. This may be advantageous in order to detect for instance if one or several of the nozzles are clogged, or the degree of clogging of the nozzles. According to the definitions above it is also possible to establish which of the nozzles that has a certain degree of clogging. The wear of permanently open nozzles may also be establish in accordance with what has been defined above.

According to a further embodiment of the invention, said nozzles are intermittently openable. In such a centrifugal separator, the inventive sensor device is particularly advantageous for establishing by means of the evaluation unit a possible leakage from the nozzles. The sensor device may also according to this embodiment be used for determining the rotary speed of the centrifuge rotor.

### BRIEF DESCRIPTION OF THE DRAWINGS

The invention is now to be explained more closely through a description of various embodiments and with reference to the drawings attached hereto.
Fig 1 discloses a partly sectional view of a centrifugal separator having a sensor device according to the invention.
Fig 2 discloses a sectional view of a part of the sensor device in Fig.1.

### DETAILED DESCRIPTION OF VARIOUS EMBODIMENTS OF THE INVENTION

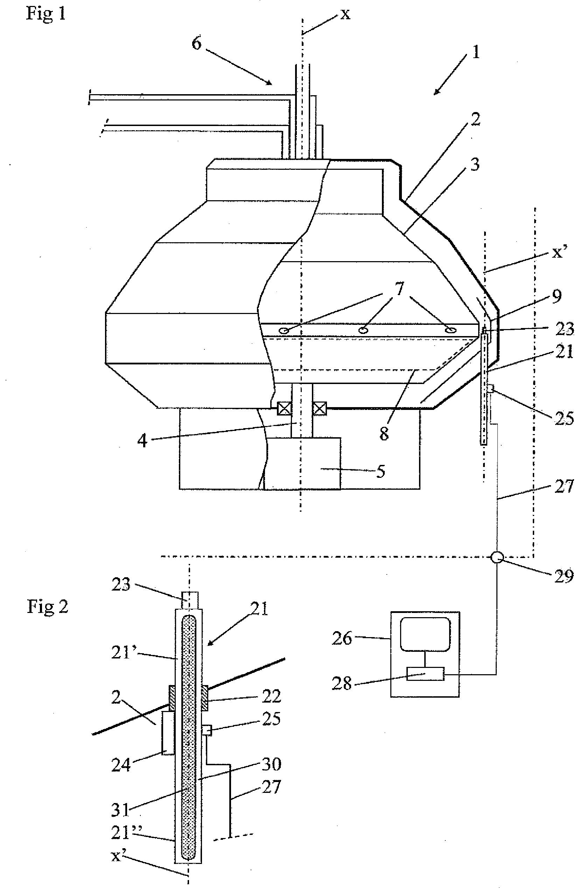

Fig 1 discloses a centrifugal separator 1 having a stationary casing 2 and a centrifuge rotor 3 which is provided to rotate around an axis x of rotation in the stationary casing 2. The centrifuge rotor 3 is driven via a spindle 4 by a schematically indicated drive motor 5. The centrifugal separator 1 comprises inlet and outlet conduits which are schematically indicated at 6 and which are configured in a manner known per se.

Furthermore, the centrifuge rotor 3 comprises a plurality of nozzles 7 for discharge of a product, such as liquid, which for instance may comprise or consist of sludge. The nozzles 7 may be permanently open nozzles. The nozzles 7 may alternatively be intermittently openable nozzles which may open in a manner known per se by means of a schematically indicated valve disc 8 provided within the centrifuge rotor 3.

The nozzles 7 are distributed, or preferably uniformly distributed, along the periphery of the centrifuge rotor 3. Outside the nozzles 7, a guide element 9 is provided. The guide element 9 is configured to receive and guide the product discharged through the nozzles 7 out of the stationary casing 7 and the centrifugal separator 1 in a suitable manner.

A sensor device for sensing vibrations is also provided in connection to the centrifugal separator 1 or is a part of the centrifugal separator 1. The sensor device comprises a transfer element 21 which is manufactured of a suitable material, for instance a metallic material.

The transfer element 21 has a first part 21' having an inner end, and a second part 21" having an outer end, see Fig 2, and being configured to be mounted to the centrifugal separator 1 in such a way that the first part 21' and the inner end are located inside the stationary casing 2 and outside the centrifuge rotor 3, and that the second part 21" and the outer end are located outside the stationary casing 2.

In the embodiment disclosed, the transfer element 21, i.e. both the first part 21 and the second part 21", has a common elongated or rod like shape. The transfer element 21 extends in a longitudinal direction x'. The longitudinal direction x' may be parallel, or substantially parallel, to the axis x of rotation. The longitudinal direction x' may be permitted to form an angle to the axis x of rotation. However, it is possible to merely let the first part 21' have said elongated shape. The second part 21" which is located outside the stationary casing may have any other suitable shape and for instance be angled.

The transfer element 21 is thus attached to the centrifugal separator 1 and more precisely in the stationary casing 2 by means of a suitable, schematically disclosed holder member 22, which advantageously may be a part of the sensor device but also could be a part of the centrifugal separator. The holder member 22 is configured to extend through and be fixedly connected to the stationary casing 2. The holder member 22 is tubular and the transfer element 21 extends through the central passage of the tubular holder member 22 as can be seen in Fig 2. The holder member 22 may be configured as a sleeve in which the transfer element 21 is introduced.

The transfer element 21 comprises a receiving head 23 which is comprised by the first part 21' and thus is provided at the inner end of the transfer element 21, and more precisely immediately outside the nozzles 7 of the centrifuge rotor 3 but inside the stationary casing 2 and the guide element 9.

The transfer element 21 is movably provided in the holder member 22. The transfer element 21 may then be displaceable along the longitudinal direction x'. In such a way, the position of the receiving head 23 may be adjusted, for instance with respect to the position of the nozzles 7 along the axis x of rotation also in the case when the longitudinal direction forms an angle to the axis x of rotation.

Furthermore, the transfer element 21 may be rotatable around the longitudinal direction x', which enables sensing of the direction of the product discharged from the nozzles 7.

The transfer element 21 may be manually movable, i.e. an operator may by hand displace the transfer element 21 along the longitudinal direction x' and/or rotate the transfer element 21 around the longitudinal direction x'. It is also possible to provide a schematically disclosed drive member 24 which provides the movements of the transfer element 21, i.e. the drive member 21 may displace the transfer element 21 along the longitudinal direction x' and/or rotate the transfer element 21 around the longitudinal direction x'.

The sensor device also comprises a sensor element 25 which is mounted to the second part 21" of the transfer element 21, i.e. the stationary casing 2 and in the embodiment disclosed in the proximity of the outer end of the transfer element 21. The sensor element 25 may comprise or consist of an accelerometer, preferably a linear accelerometer. The accelerometer may comprise or consist of a piezoelectric element. Such a piezoelectric element generates a signal in the form of an electric voltage when it is deformed, for instance due to vibrations.

The sensor device also comprises an evaluation unit 26 which communicates with the sensor element 25, for instance wirelessly or via a conduit 27, for transferring signals from the sensor element 25 to the evaluation unit 26. The evaluation unit 26 comprises a processor 28 and is configured to interpret the signals generated by the sensor element 25. The evaluation unit 26 also comprises a display which for instance may include an oscilloscope. The conduit 27 comprises a zener barrier 29. The evaluation unit 26 may also communicate with the drive member 24 for receiving of a signal defining the position of the receiving head 23, especially in relation to the nozzles 7.

The sensor element 25 is configured to sense the vibrations that propagates from the receiving head 23 to the sensor element 25 via the transfer element 21. The vibrations propagate in the material of the transfer element 21. The transfer element 21 is as can be seen in Fig 2 tubular and has a wall 30 which forms a closed inner space 31. The vibrations will thus propagate in the wall of the receiving head 23 the sensor element 25. The closed inner space 31 is as indicated in Fig 2 filled with a damping material. The damping material may comprise or consist of sand which have suitable damping properties in the context.

In the case when the nozzles 7 are intermittently openable, the sensor device may operate in such a way that when the nozzles 7 during a short time period are opened, the product is discharged at a high velocity from the centrifuge rotor 3. This product will hit the receiving element 21 and more precisely the receiving head 23. Vibrations will then be generated in the transfer element 21, and these propagate via the wall 30 to the sensor element 25. The signals which are then generated by the sensor element 25 are conveyed to the evaluation unit 26 and are processed by the processor 28. The evaluation unit 26 is configured to analyze the signals from the sensor element 25 and to establish a plurality of various parameters and states. The signals obtained may for instance comprise the following parameters:
Peak value
Rise time
Fall time
Width
Surface.

By means of these parameters, knowledge about the discharge of the product may be obtained. For instance, it can be mentioned that the surface may be assumed to be proportional to the flow, i.e. the quantity of the product discharged through the nozzles 7. The evaluation unit 26 may also be adapted to detect if one or several of the nozzles 7 leaks. If such a leakage arise, a smaller amount of the product will more or less continuously be discharged and hit the receiving head 23 of the transfer element 21. Again, vibrations will then be generated and propagate to the sensor element 25 which delivers corresponding signals to the evaluation unit 26. The evaluation unit 26 may then be configured to give the user information about the present leakage, for instance through any kind of alarm. It is to be noted that the sensor device is very sensitive and that a leakage may be detected at a very early stage, wherein suitable repair measures may be taken.

Furthermore, the sensor device may be used for detecting a possible leakage of the operating liquid used for controlling the position of the valve disc 8.

It is also to be noted that sensor device and the evaluation unit 26 may be configured to calculate the rotary speed of the centrifuge rotor by means of the signals from the sensor element 25. In combination with a determination of the rotary speed, the detection of a leakage and possibly also the position of the nozzles 7, it is possible to calculate which of the nozzles 7 possibly leaks by means of the processor 28 of the evaluation unit 26.

In the case that the nozzles 7 are permanently open, the sensor device and the evaluation unit 26 may be configured to calculate the rotary speed of the centrifuge rotor 3 by means of the signals from the sensor element 25. Also in this case it is possible to obtain information and knowledge about the discharged product, for instance the discharge direction of the product and the position or path of the product from the nozzles 7, by means of signals from the sensor element 25. The sensor device may in this case also be used for detecting if any of the nozzles 7 is clogged or is beginning to be clogged through a determination of the flow of the product that is discharged.

Finally, it is also to be noted that the sensor device and the evaluation unit 26 may detect vibrations emanating from other sources than the nozzles 7, for instance various defects in the centrifugal separator 1 such as play in the bearings etc. It can be assumed that such defects will result in vibrations with other frequencies than those which arise at leakage and discharge of the product, and that these defects thus are possible to detect.

The invention is not limited to the embodiments disclosed but may be modified and varied within the scope of the following claims.

## Claims

1. A centrifugal separator (1) having a stationary casing (2) and a centrifuge rotor (3), which is provided in the stationary casing (2) and arranged to rotate around an axis (x) of rotation at a rotary speed and which comprises a plurality of nozzles (7) for discharge of a product from the centrifuge rotor (3), wherein the centrifugal separator comprises a sensor device, which comprises
a transfer element (21), which has a first part (21') and a second part (21") and which is configured to be mounted in such a way that the first part (21') is located inside the stationary casing (2) and outside the centrifuge rotor (3) and that the second part (21") is located outside the stationary casing (2), wherein at least the first part (21') of the transfer element (21) has an elongated shape and extends in a longitudinal direction (x'),
a receiving head (23), which is comprised by the first part (21') of the transfer element (21),
a sensor element (25), which is mounted to the second part (21") of transfer element (21) and which is configured to sense vibrations propagating from the receiving head (23) to the sensor element (25), and
an evaluation unit (26), which communicates with the sensor element (25) for transmitting signals from the sensor element (25) to the evaluation unit (26),
**characterized in that** the transfer element is configured in such a way that it is movable in relation to the centrifuge rotor (3) and the stationary casing (2) in such a way that the position of the receiving head (23) is adjustable along the axis (x) of rotation.

2. A centrifugal separator according to claim 1, wherein the sensor device comprises a holder member (22) which is configured to extend through and be fixedly connected to the stationary casing (2), wherein the transfer element (21) is movably provided in the holder element (22).

3. A centrifugal separator according to claim 2, wherein the transfer element (21) is displaceable along the longitudinal direction (x').

4. A centrifugal separator according to any one of claims 2 and 3, wherein the transfer element (21) is rotatable around the longitudinal direction (x').

5. A centrifugal separator according to any one of the preceding claims, wherein the sensor element (25) is centrally provided on the transfer element (21) with respect to the longitudinal direction (x').

6. A centrifugal separator according to any one of the preceding claims, wherein the transfer element (21) is manufactured of a material configured to permit said propagation of vibrations from the receiving head (23) to sensor element (25).

7. A centrifugal separator according to claim 6, wherein the transfer element (21) is tubular having a wall (30) of said material, which forms a closed inner space (31), wherein the wall (30) is adapted to permit propagation of vibrations from the receiving head (23) to sensor element (25).

8. A centrifugal separator according to claim 7, wherein the closed inner space (31) is filled with a damping material.

9. A centrifugal separator according to any one of the preceding claims, wherein the sensor element (25) comprises an accelerometer.

10. A centrifugal separator according to any one of the preceding claims, wherein the evaluation unit (26) communicates with the sensor element (25) via a conduit (27) comprising a zener barrier (29).

11. A centrifugal separator according to any one of the preceding claims, wherein the evaluation unit (26) is configured to calculate the rotary speed of the centrifuge rotor (3) by means of said signals.

12. A centrifugal separator according to any one of the preceding claims, wherein the nozzles (7) comprise intermittently openable nozzles and wherein the evaluation unit (26) is configured to establish a possible leakage from the nozzles (7) by means of said signals.

13. A centrifugal separator according to any one of claims 1-11, wherein said nozzles are permanently open.

14. A centrifugal separator according to any one of claims 1-11, wherein said nozzles are intermittently openable.

## Patentansprüche

1. Fliehkraftabscheider (1), welcher ein stationäres Gehäuse (2) und einen Zentrifugenrotor (3) besitzt, welcher in dem stationären Gehäuse (2) bereitgestellt und angeordnet ist, um eine Drehachse (x) bei einer Drehzahl zu drehen, und welcher eine Vielzahl von Düsen (7) zum Ablassen eines Produkts aus dem Zentrifugenrotor (3) beinhaltet, wobei der Fliehkraftabscheider eine Sensorvorrichtung beinhaltet, welche Folgendes beinhaltet:
ein Transferelement (21), welches einen ersten Teil (21') und einen zweiten Teil (21") besitzt und konfiguriert ist, um in einer Weise montiert zu werden, dass das erste Teil (21') innerhalb des stationären Gehäuses (2) und außerhalb des Zentrifugenrotors (3) befindlich ist, und dass das zweite Teil (21") außerhalb des stationären Gehäuses (2) befindlich ist, wobei mindestens das erste Teil (21') des Transferelementes (21) eine verlängerte Form besitzt und sich in eine Längsrichtung (x') erstreckt,
einen Aufnahmekopf (23), welcher aus dem ersten Teil (21') des Transferelementes (21) besteht,
ein Sensorelement (25), welches an dem zweiten Teil (21") des Transferelementes (21) montiert und welches konfiguriert ist, um Vibrationen zu erfassen, welche sich vom Aufnahmekopf (23) zum Sensorelement (25) fortpflanzen, und
eine Auswertungseinheit (26), welche mit dem Sensorelement (25) zur Übertragung von Signalen vom Sensorelement (25) an die Auswertungseinheit (26) kommuniziert,
**dadurch gekennzeichnet, dass** das Transferelement in einer Art konfiguriert ist, dass es in Bezug auf den Zentrifugenrotor (3) und das stationäre Gehäuse (2) in einer Weise beweglich ist, dass die Position des Aufnahmekopfes (23) entlang der Drehachse (x) verstellbar ist.

2. Fliehkraftabscheider nach Anspruch 1, bei welchem die Sensorvorrichtung ein Halterglied (22) beinhaltet, welches konfiguriert ist, um sich durch das stationäre Gehäuse (2) zu erstrecken und fest damit verbunden zu werden, wobei das Transferelement (21) beweglich in dem Halterelement (22) bereitgestellt ist.

3. Fliehkraftabscheider nach Anspruch 2, bei welchem das Transferelement (21) entlang der Längsrichtung (x') verschiebbar ist.

4. Fliehkraftabscheider nach einem der Ansprüche 2 und 3, bei welchem das Transferelement (21) um die Längsrichtung (x') drehbar ist.

5. Fliehkraftabscheider nach einem der vorhergehenden Ansprüche, bei welchem das Sensorelement (25) zentral an dem Transferelement (21) in Bezug auf die Längsrichtung (x') bereitgestellt ist.

6. Fliehkraftabscheider nach einem der vorhergehenden Ansprüche, bei welchem das Transferelement (21) aus einem Material hergestellt ist, welches konfiguriert ist, um die Fortpflanzung von Vibrationen von dem Aufnahmekopf (23) an das Sensorelement (25) zu ermöglichen.

7. Fliehkraftabscheider nach Anspruch 6, bei welchem das Transferelement (21) röhrenförmig ist, wobei es eine Wand (30) aus dem Material besitzt, welche einen geschlossenen inneren Raum (31) bildet, wobei die Wand (30) geeignet ist, um Fortpflanzung von Vibrationen von dem Aufnahmekopf (23) an das Sensorelement (25) zu ermöglichen.

8. Fliehkraftabscheider nach Anspruch 7, bei welchem der geschlossene innere Raum (31) mit einem dämpfenden Material gefüllt ist.

9. Fliehkraftabscheider nach einem der vorhergehenden Ansprüche, bei welchem das Sensorelement (25) einen Beschleunigungsmesser beinhaltet.

10. Fliehkraftabscheider nach einem der vorhergehenden Ansprüche, bei welchem die Auswertungseinheit (26) mit dem Sensorelement (25) über eine Leitung (27) kommuniziert, welche eine Zenerbarriere (29) beinhaltet.

11. Fliehkraftabscheider nach einem der vorhergehenden Ansprüche, bei welchem die Auswertungseinheit (26) konfiguriert ist, um die Drehzahl des Zentrifugenrotors (3) mit Hilfe der Signale zu berechnen.

12. Fliehkraftabscheider nach einem der vorhergehenden Ansprüche, bei welchem die Düsen (7) intermittierend öffenbare Düsen beinhalten und wobei die Auswerteeinheit (26) konfiguriert ist, um eine mögliche Leckage von den Düsen (7) mit Hilfe der Signale zu bestimmen.

13. Fliehkraftabscheider nach einem der vorhergehenden Ansprüche 1 bis 11, bei welchem die Düsen permanent geöffnet sind.

14. Fliehkraftabscheider nach einem der vorhergehenden Ansprüche 1 bis 11, bei welchem die Düsen intermittierend öffenbar sind.

## Revendications

1. Séparateur centrifuge (1) présentant un carter fixe (2) et un rotor centrifuge (3), qui est ménagé dans le carter fixe (2) et agencé afin de tourner autour d'un axe (x) de rotation à une vitesse de rotation et qui comprend une pluralité de buses (7) permettant de décharger un produit du rotor centrifuge (3), dans lequel le séparateur centrifuge comprend un dispositif capteur, qui comprend
un élément de transfert (21), qui présente une première partie (21') et une seconde partie (21") et qui est configuré afin d'être monté de sorte que la première partie (21') soit située à l'intérieur du carter fixe (2) et hors du rotor centrifuge (3) et que la seconde partie (21") soit située hors du carter fixe (2), dans lequel au moins la première partie (21') de l'élément de transfert (21) présente une forme allongée et s'étend dans une direction longitudinale (x'),
une tête de réception (23), qui comprend la première partie (21') de l'élément de transfert (21),
un élément capteur (25), qui est monté sur la seconde partie (21") de l'élément de transfert (21) et qui est configuré afin de détecter des vibrations se propageant depuis la tête de réception (23) vers l'élément capteur (25), et
une unité d'évaluation (26), qui communique avec l'élément capteur (25) permettant de transmettre des signaux de l'élément capteur (25) à l'unité d'évaluation (26),
**caractérisé en ce que** l'élément de transfert est configuré de telle sorte qu'il soit mobile relativement au rotor centrifuge (3) et au carter fixe (2) de telle sorte que la position de la tête de réception (23) soit réglable le long de l'axe (x) de rotation.

2. Séparateur centrifuge selon la revendication 1, dans lequel le dispositif capteur comprend un élément de support (22) qui est configuré afin de s'étendre à travers le carter fixe (2) et d'être raccordé fixement à celui-ci, dans lequel l'élément de transfert (21) est ménagé de manière mobile dans l'élément de support (22).

3. Séparateur centrifuge selon la revendication 2, dans lequel l'élément de transfert (21) peut se déplacer le long de la direction longitudinale (x').

4. Séparateur centrifuge selon l'une quelconque des revendications 2 et 3, dans lequel l'élément de transfert (21) peut tourner autour de la direction longitudinale (x').

5. Séparateur centrifuge selon l'une quelconque des revendications précédentes, dans lequel l'élément capteur (25) est ménagé de manière centrale sur l'élément de transfert (21) relativement à la direction longitudinale (x').

6. Séparateur centrifuge selon l'une quelconque des revendications précédentes, dans lequel l'élément de transfert (21) est fabriqué en un matériau configuré de façon à permettre ladite propagation de vibrations depuis la tête de réception (23) vers l'élément capteur (25).

7. Séparateur centrifuge selon la revendication 6, dans lequel l'élément de transfert (21) est tubulaire et présente une paroi (30) dudit matériau, qui forme un espace interne fermé (31), dans lequel la paroi (30) est conçue afin de permettre la propagation de vibrations de la tête de réception (23) vers l'élément capteur (25).

8. Séparateur centrifuge selon la revendication 7, dans lequel l'espace interne fermé (31) est rempli d'un matériau amortissant.

9. Séparateur centrifuge selon l'une quelconque des revendications précédentes, dans lequel l'élément capteur (25) comprend un accéléromètre.

10. Séparateur centrifuge selon l'une quelconque des revendications précédentes, dans lequel l'unité d'évaluation (26) communique avec l'élément capteur (25) par le biais d'un conduit (27) comprenant une barrière Zener (29).

11. Séparateur centrifuge selon l'une quelconque des revendications précédentes, dans lequel l'unité d'évaluation (26) est configurée afin de calculer la vitesse de rotation du rotor centrifuge (3) au moyen desdits signaux.

12. Séparateur centrifuge selon l'une quelconque des revendications précédentes, dans lequel les buses (7) comprennent des buses pouvant être ouvertes par intermittence, et dans lequel l'unité d'évaluation (26) est configurée afin d'établir une fuite éventuelle des buses (7) au moyen desdits signaux.

13. Séparateur centrifuge selon l'une quelconque des revendications 1 à 11, dans lequel lesdites buses sont ouvertes en permanence.

14. Séparateur centrifuge selon l'une quelconque des revendications 1 à 11, dans lequel lesdites buses peuvent être ouvertes par intermittence.
